(19)

Europäisches Patentamt
European Patent Office
Office européen des brevets

(11) **EP 1 910 701 B1**

(12) **EUROPÄISCHE PATENTSCHRIFT**

(45) Veröffentlichungstag und Bekanntmachung des Hinweises auf die Patenterteilung:
**24.12.2008 Patentblatt 2008/52**

(21) Anmeldenummer: 06762801.6

(22) Anmeldetag: **25.07.2006**

(51) Int Cl.:
***F16D 65/06*** *(2006.01)*

(86) Internationale Anmeldenummer:
**PCT/EP2006/007310**

(87) Internationale Veröffentlichungsnummer:
**WO 2007/012457 (01.02.2007 Gazette 2007/05)**

(54) **BREMSKLOTZEINRICHTUNG**

BRAKE PAD DEVICE

SYSTEME DE SABOT DE FREIN

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.07.2005 DE 102005034860**

(43) Veröffentlichungstag der Anmeldung:
**16.04.2008 Patentblatt 2008/16**

(73) Patentinhaber: **KNORR-BREMSE Systeme für Schienenfahrzeuge GmbH 80809 München (DE)**

(72) Erfinder:
• **ELSTORPFF, Marc-Gregory 80638 München (DE)**

• **MATHIEU, Michael 82178 Puchheim (DE)**
• **STALTMEIR, Josef 80807 München (DE)**

(74) Vertreter: **Mattusch, Gundula Knorr Bremse Systeme für Schienenfahrzeuge GmbH Moosacher Strasse 80 80809 München (DE)**

(56) Entgegenhaltungen:
**US-A- 1 167 937        US-A- 2 161 363
US-A- 5 407 031        US-B1- 6 588 553**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die Erfindung betrifft eine Bremsklotzeinrichtung für ein Schienenfahrzeug, beinhaltend wenigstens einen Bremsklotz bestehend aus einem Bremsklotzhalter und einer Bremsklotzsohle zur Erzeugung einer Bremskraft durch reibschlüssigen Kontakt eines Verschleißvolumens der Bremsklotzsohle mit einer sich an einen Spurkranz anschließenden Lauffläche eines Rades, welche sich im Querschnitt nach außen hin verjüngt, gemäß dem Oberbegriff von Patentanspruch 1.

Aktuelle Bestrebungen im Güterwagenbereich zielen darauf ab, statt der bisher üblichen Bremsklotzsohlen aus Grauguss sog. Komposit-Bremsklotzsohlen oder auch Verbundstoff-Bremsklotzsohlen zu verwenden, welche In Kunstharz gebundene organische und/ oder anorganische Stoffe wie beispielsweise Aramidfasern, Kupferfasern oder Stahlfasern beinhalten.

Komposit-Bremsklotzsohlen bieten gegenüber herkömmlichen Grauguss- Bremsklötzen unter anderem folgende Vorteile:

Komposit-Bremsklotzsohlen neigen gegenüber Grauguss-Bremsklotzsohlen weiniger zur Ausbildung von Riffeln auf der Radlauffläche. Dadurch wird das Rollgeräusch des Rades auf der Schiene deutlich reduziert, was einen positiven Beitrag zum Lärmschutz bedeutet.

Komposit-Bremsklotzsohlen bieten im Gegensatz zu Grauguss-Bremsklotzsohlen über dem Geschwindigkeitsbereich eine nahezu konstante Reibungszahl. Dadurch reduziert sich die Gefahr von Flachstellen an der Radlauffläche, welche beispielsweise durch Blockieren eines Rades bei niedriger Geschwindigkeit infolge des starken Reibwertanstieges von Grauguss-Bremsklotzsohlen mit abnehmender Geschwindigkeit entstehen.

Die Reibungszahl von Komposit-Bremsklotzsohlen gegenüber dem Stahl der Lauffläche des zugeordneten Rades beträgt etwa 0,25 und ist damit deutlich höher als der durchschnittliche Reibwert von Grauguss-Bremsklotzsohlen. Damit reduziert sich die erforderliche Bremsklotz-Anpresskraft erheblich.

Ein Nachteil der Komposit-Bremsklotzsohlen besteht darin, dass sie im Vergleich zu herkömmlichen Grauguss- Bremsklötzen einen höheren Verschleiß am Radreifen oder an der Radlauffläche verursachen.

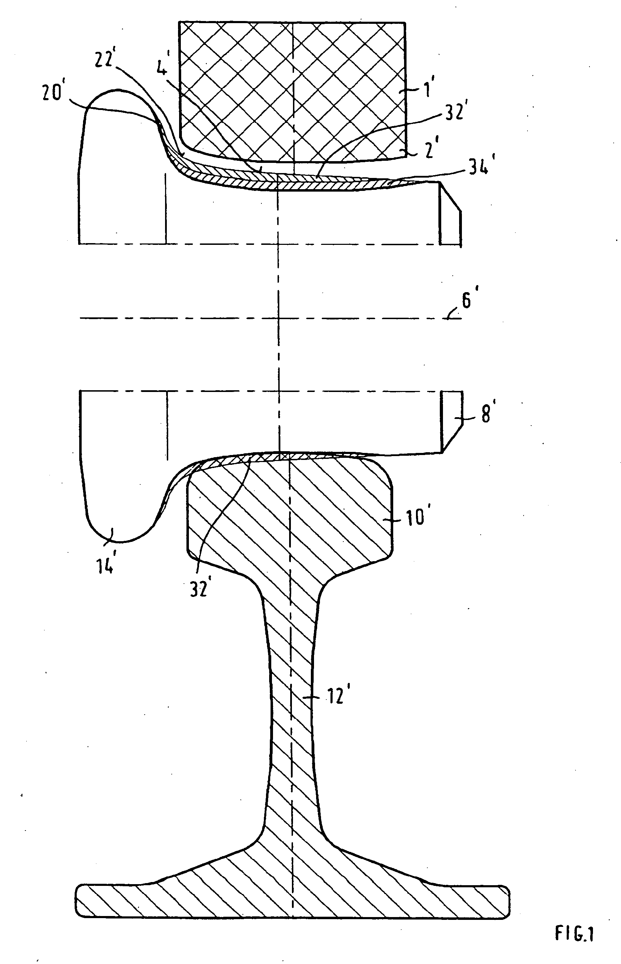

Für das Laufverhalten eines Schienenfahrzeuges spielt die Geometrie des Radprofils eine wichtige Rolle. Von einer in Fig.1 gezeigten Bremsklotzeinrichtung des Stands der Technik ist aus Maßstabsgründen lediglich ein Verschleißvolumen 1' einer von einem nicht gezeigten Bremsklotzhalter an einem Haltevolumen gehaltenen Bremsklotzsohle 2' gezeigt, wie es mit einer Lauffläche 4' eines mit einer Achse 6' drehenden Rades 8' eines Schienenfahrzeugs zusammenwirkt, welches mit derselben Lauffläche 4' auf einem Schienenkopf 10' einer Schiene 12' abrollt.

Die Lauffläche 4' des Schienenfahrzeugrades 8' ist im wesentlichen konisch oder als Kegelfläche ausgebildet, d.h. der Querschnitt verjüngt sich in von einem Spurkranz 14' weg weisender Richtung nach außen hin. Diese Geometrie ermöglicht den sog. Sinuslauf eines Radsatzes, mit welchem in Geraden und Kurven mit großen Radien eines Selbstzentrierung auf dem Fahrweg erzeugt wird, ohne dass es zum Anlaufen des Spurkranzes kommen muss. Dadurch wird ein besseres Laufverhalten und ein geringerer Verschleiß erreicht als bei Radsätzen mit zylindrischem Radprofil, die keinen Sinuslauf aufweisen.

Zum Sinuslauf kommt es dadurch, dass bei einem Radsatz mit konischem Radprofil, welcher außermittig steht, die Radradien an den beiden Berührpunkten am Gleis unterschiedlich sind. Da die beiden Räder des Radsatzes über die Achse 6' starr verbunden sind, bewegt sich das Rad 8' mit dem größeren Radius am Berührpunkt schneller nach vorne als das Rad 8' mit dem kleineren Radius. Daher lenkt ein zu weit rechts stehender Radsatz nach links, weil der Radradius am rechten Berührpunkt größer ist als am linken Berührpunkt, entsprechend lenkt ein zu weit links stehender Radsatz nach rechts. Hierdurch kommt es zu einer Längsbewegung des Radsatzes in Form einer Sinuskurve. Durch die geringe Reibung, die der Kontakt Rad-Schiene aufweist, wird diesem mechanischen Schwingkreis ständig Energie entzogen, so dass die Amplitude der Sinusbewegung immer mehr abnimmt. Dadurch erreicht man, dass ein Radsatz, der beispielsweise durch einen Fehler in der Gleislage oder durch eine Kurve in eine außermittige Lage geraten ist, nach einigen Sinusschwingungen wieder in die mittige Lage zurückkehrt. Um einen solchen Sinuslauf auch über längeren Zeitraum zu ermöglichen, sollte sich das konische Profil des Rades nicht ändern. Im Hinblick auf die eingangs erwähnte höhere Verschleißneigung von Komposit-Bremsklotzsohlen 2 stellt dies allerdings ein Problem dar.

Der Verschleiß des Rades 8' setzt sich im wesentlichen aus dem Verschleiß durch den Kontakt zwischen Rad und Schiene (Rollverschleiß 32') und aus dem Verschleiß durch den Kontakt zwischen Rad und Bremsklotz (Bremsklotzverschleiß 34') während der Bremsungen und auch in Lösestellung zusammen.

Was den Rollverschleiß 32' betrifft, so findet der Kontakt zwischen Rad 8' und Schienenkopf 10' eines unverschlissenen Rades 8' hauptsächlich in dem Bereich statt, in welchem der Raddurchmesser größer ist, also in der Nähe einer Hohlkehle 22' des Radprofils, welche einen Übergangsradius der Lauffläche 4' zum Spurkranz 14' bildet, wie aus Fig.1 hervorgeht. Denn bei Kurven- und Weichenfahrten kommt auch die Hohlkehle 22' mit dem Schienenkopf 10' in Kontakt. Das hat zur Folge, dass im Laufe der Zeit verschleißbedingt die konische oder kegelige Kontur der Lauffläche 4' verloren geht. Mit der Zeit kann sich eine konkave Mulde ausbilden, wodurch sich das Laufverhalten verschlechtert und der Verschleiß von Lauffläche 4' und Schienenkopf 10' erhöht. Das Rad 8' muss dann an speziellen Radsatzdrehmaschinen soweit abgedreht werden, bis sich wieder das geforderte konische Profil ergibt. Maßgeblich für die erforderliche Reduzierung des Raddurchmessers beim Reprofilieren ist die maximale, radial gemessene Verschleißtiefe beider Räder 8' eines Radsatzes. Diese tritt meist im Bereich der Hohlkehle 22' auf, so dass relativ viel Material des Rades 8' oder Radreifens ungenutzt abgedreht werden muss um wieder das konische Profil zu erhalten.

Was den Bremsklotzverschleiß 34' betrifft, so verschleißt durch die Reibung in der Kontaktfläche sowohl die Bremsklotzsohle 2' als auch das Rad 8'. Der Radsatz ist relativ zum Drehgestellrahmen elastisch gelagert und bewegt sich während der Fahrt in Querrichtung. Bezüglich der Bremsklotzaufhängung im Drehgestell gibt es im wesentlichen zwei Varianten:

Der Bremsklotz mit der Bremsklotzsohle 2' ist in Querrichtung relativ starr zum Drehgestellrahmen geführt, z.B. bei Bremsgestängen in Lokomotiven oder bei Anwendung von Klotzbremseinheiten. Während einer Bremsung verschiebt sich bei dieser Anordnung die Bremsklotzsohle 2' entsprechend der Achsquerbewegung auf der Lauffläche 4'. Um diese Verschiebemöglichkeit zu gewährleisten, muss die Bremsklotzsohle 2' schmäler sein als die Lauffläche 4'.

Bei älteren Reisezugwagen mit Klotzbremse oder bei Güterwagen sind zwei Bremsklötze für die beiden Räder eines Radsatzes über ein Bremsdreieck gekoppelt. Dieses Bremsdreieck ist in Hängelaschen schwimmend aufgehängt. Auch bei der modernen Drehgestell- Klotzbremse für Güterwagen sind jeweils zwei gegenüberliegende Bremsklötze eines Radsatzes gekoppelt. So können die Bremsklötze in Lösestellung und während einer Bremsung der Querbewegung des Radsatzes folgen.

Auch in Lösestellung kommt es gelegentlich bei Achsquerbewegungen und Querbeschleunigungen, z.B. bei Weichenfahrt, zum Kontakt zwischen Spurkranzflanke 20' und Bremsklotzsohle 2'. Auch dadurch entsteht ein gewisser Roll- und Bremsklotzverschleiß 32', 34'.

Die Summe der Verschleißanteile aus Bremsklotzverschleiß 34' und Rollverschleiß 32' ist in Fig.1 im oberen Bereich dargestellt. Im wesentlichen ergibt sich sowohl durch den Rollverschleiß 32' als auch durch den Bremsklotzverschleiß 34' eine Veränderung des Radprofils dahingehend, dass die ursprünglich kegelige Radlauffläche 4' eine Zylinderform annimmt bzw. konkav ausgehöhlt wird. Um die ursprüngliche konische Form wiederherzustellen, muss folglich vom Rad 8' relativ viel Volumen durch spanende Bearbeitung entfernt werden.

In der GB 1,143,992 ist ein Bremsklotz für Schienenfahrzeuge offenbart, der aus zwei unterschiedlichen Reibmaterialien aufgebaut ist. Der Bremsklotz ist in drei Segmente unterteilt, wobei das mittlere Segment aus einem stärker abrasiven Material als die beiden äußeren Segmente besteht. Diese Maßnahme ergebe sich aus dem Umstand, dass die Radlauffläche im mittleren Bereich durch den Kontakt mit der Schiene gehärtet wird und dort deshalb ein stärker abrasives Klotzmaterial erforderlich sei. Bei einer aus der EP 1 063 144 A2 bekannten Bremsklotzeinrichtung ist der Lauffläche des Rades und dem Spurkranz ein Reibmaterial mit jeweils anderen Reibeigenschaften zugeordnet.

Eine gattungsgemäße Bremsklotzeinrichtung ist in der US 2,161,363 offenbart. Die Bremsklotzeinrichtung umfasst einen einen Bremsklotz tragenden Bremsschuh, wobei der Bremsklotz in Richtung der Lauffläche des Rades gesehen mehrteilig ausgebildet ist. Gemäß der Schrift wird das Bremsblockmaterial so gewählt, dass bei einer sich konisch nach außen verjüngenden Lauffläche eines Schienenfahrzeugrades die Härte des Bremsblockmaterials nach außen hin und bei einer sich konisch nach innen verjüngenden Lauffläche nach innen hin abnimmt.

Aufgabe der vorliegenden Erfindung ist es, eine Bremsklotzeinrichtung der eingangs erwähnten Art derart weiter zu bilden, dass das kegelige oder konische Profil der Lauffläche des Rades auch in verschlissenem Zustand aufrecht erhalten wird; damit ein Sinuslauf weiterhin möglich ist.

Diese Aufgabe wird durch die Merkmale von Patentanspruch 1 gelöst.

Vorteile der Erfindung

Indem vorgeschlagen wird, dass die Gleitreibungszahl und/oder die Härte zumindest des Verschleißvolumens der Bremsklotzsohle in vom Spurkranz weg weisender Richtung zunimmt, nimmt auch die abrasive Wirkung und damit auch der Verschleiß, welcher aus dem Gleitkontakt der Bremsklotzsohle mit der Lauffläche des Rades resultiert, in dieser Richtung zu. Folglich behält die Lauffläche des Rades auch in verschlissenem Zustand ihr ursprünglich kegeliges oder konisches Profil bei. Dadurch wird auch dem Einfluss des aus dem Kontakt mit der Schiene resultierenden Rollverschleißes entgegengewirkt, welcher die Lauffläche tendenziell zylindrisch formt. Folglich erfüllt die erfindungsgemäße Bremsklotzsohle eine Doppelfunktion, indem sie neben ihrer Hauptfunktion Bremsen zusätzlich die Funktion der Korrektur des Radreifenprofils übernimmt.

Unter der Gleitreibungszahl f wird bei gleitender Reibung, wie sie bei Klotzbremsen auftritt, im allgemein das Verhältnis aus der Reibungskraft Ff zur wirkenden Normalkraft Fn bezeichnet:

$$f \cong \frac{F_f}{F_n}$$

Diese Gleitreibungszahl f ist jedoch kein konstanter Kennwert eines Werkstoffs oder einer Werkstoffpaarung, sondern von den Beanspruchungsbedingungen und den Eigenschaften aller am Reibungsvorgang beteiligten stofflichen Elemente. Wesentlich für die Erfindung sind daher keine absoluten Werte für die Gleitreibungszahl f, welche der Fachmann je nach Anforderung der Radlauffläche variieren kann, sondern der Umstand, dass sie in vom Spurkranz weg weisender Richtung zunimmt, um die abrasive Wirkung in gleicher Richtung zu erhöhen. Gleich bedeutend mit steigender Gleitreibungszahl f im Sinne der Erfindung ist daher ein steigender Verschleiß. Das Gleiche gilt auch für die in vom Spurkranz weg weisender Richtung zunehmende Härte der Bremsklotzsohle. Denn eine größere Härte des Bremsklotzsohle macht sich in einem größeren Verschleiß der Radlauffläche bemerkbar.

Um das Verschleißvolumen insgesamt zu minimieren, ist es günstig, im Bereich des Rollkontaktes zwischen Rad und Schiene, wo infolge der hohen Hertz'schen Pressung eine Oberflächenhärtung der Lauffläche des Rades erfolgt, einen Reibwerkstoff zu wählen, der möglichst wenig abrasiv auf diese Oberfläche wirkt, um die harte Schicht nicht zu zerstören. "Indem der Reibwerkstoff in diesem, dem Spurkranz naheliegenden Bereich eine niedrigere Härte bzw. eine niedrigere Gleitreibungszahl als im äußeren Bereich aufweist, wird diesem Umstand Rechnung getragen. Der Bereich der Spurkranzflanke sollte ebenfalls einen möglichst geringen Radverschleiß aufweisen, weil dort bereits der Rollkontakt hohen Verschleiß erzeugt.

Durch die in den Unteransprüchen aufgeführten Maßnahmen sind vorteilhafte Weiterbildungen und Verbesserungen der in den unabhängigen Ansprüchen angegebenen Erfindung möglich.

Gemäß einer ersten Ausführungsform kann die Gleitreibungszahl f und/oder die Härte zumindest des Verschleißvolumens der Bremsklotzsohle in vom Spurkranz weg weisender Richtung kontinuierlich zunehmen. Alternativ könnte die Gleitreibungszahl f und/oder die Härte zumindest des Verschleißvolumens der Bremsklotzsohle in vom Spurkranz weg weisender Richtung stufenweise zunehmen.

Gemäß einer Weiterbildung kann sich zumindest das Verschleißvolumen der Bremsklotzsohle im wesentlichen bis an das vom Spurkranz abgewandte Ende der Lauffläche des Rades erstrecken. Somit sind die Bremsklotzsohlen mit einer Breite von beispielsweise 90 mm breiter als übliche Bremsklotzsohlen mit einer Breite von nur 80 mm. Dies ist vor allem bei Schienenfahrzeugen, bei denen die Bremsklötze Querbewegungen des Rades folgen können, beispielsweise bei über ein in Hängelaschen schwimmend am Drehgestell gelagerten Bremsdreieck gekoppelten Bremsklötzen, oder bei gekoppelten Bremsklötzen eines Radsatzes von Vorteil. Denn dann kann einerseits die gesamte zur Verfügung stehende Breite der Lauffläche des Rades als Bremsfläche genutzt werden. Andererseits erstreckt sich auch im verschlissenen Zustand das kegelige Profil bis an das äußere Ende des Rades.

Zeichnungen

Ein Ausführungsbeispiel der Erfindung ist in der Zeichnung dargestellt und in der nachfolgenden Beschreibung näher erläutert. In der Zeichnung zeigt

Fig.1 eine Querschnittsdarstellung einer Bremsklotzeinrichtung im Bereich eines Rades gemäß dem Stand der Technik;

Fig.2 eine Querschnittsdarstellung einer Bremsklotzeinrichtung im Bereich eines Rades gemäß einer bevorzugten Ausführungsform der Erfindung;

Fig.3 eine Querschnittsdarstellung einer Bremsklotzeinrichtung im Bereich eines Rades gemäß einer weiteren Ausführungsform der Erfindung.

Beschreibung des Ausführungsbeispiels

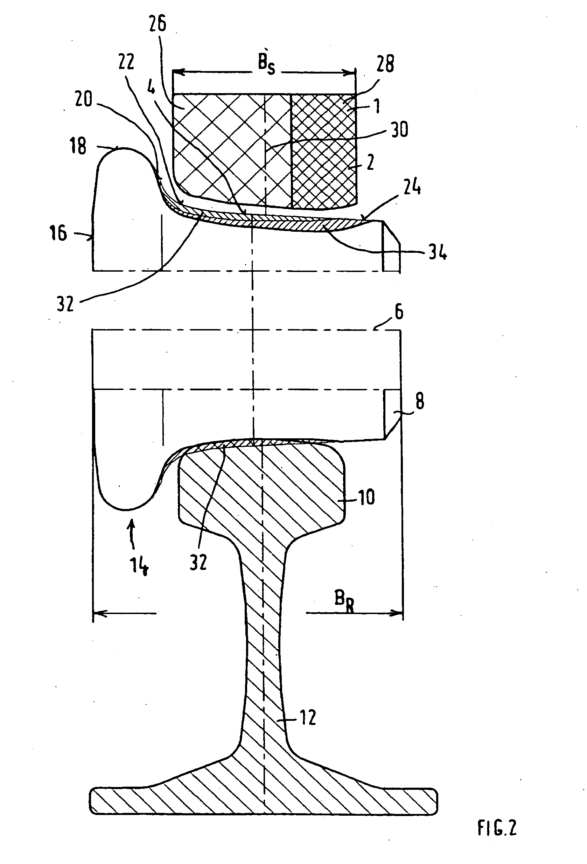

Von einer in Fig.2 gezeigten Bremsklotzeinrichtung ist aus Maßstabsgründen lediglich ein Verschleißvolumen 1 einer von einem nicht gezeigten Bremsklotzhalter an einem Haltevolumen gehaltenen Bremsklotzsohle 2 gezeigt, wie es mit einer Lauffläche 4 eines mit einer Achse 6 drehenden Rades 8 eines Schienenfahrzeugs zusammenwirkt, welches mit derselben Lauffläche 4 auf einem Schienenkopf 10 einer Schiene 12 abrollt. Die Bremsklotzeinrichtung wird von einem nicht gezeigten Bremszylinder betätigt. Das Rad 8 weist bevorzugt eine übliche Breite $B_R$ von 135 mm auf und besteht aus Stahl.

Bei der Bremsklotzsohle 2 handelt es sich vorzugsweise um eine Komposit-Bremsklotzsohle oder auch Verbundstoff-Bremsklotzsohle, welche in Kunstharz gebundene organische und/oder anorganische Stoffe wie beispielsweise Aramidfasern, Kupferfasem oder Stahlfasern beinhaltet.

Die Lauffläche 4 kann durch einen auf das Rad 8 aufgezogenen Radreifen gebildet werden und wird nach innen hin von einem im Durchmesser vergrößerten Spurkranz 14 begrenzt. Das Profil eines Schienenfahrzeugrades 8 wird in Achsrichtung nach außen gesehen im allgemeinen durch einen Spurkranzrücken 16, eine Spurkranzkuppe 20, eine Spurkranzflanke 20, eine Hohlkehle 22, die Lauffläche 4 sowie durch einen äußeren Profilauslauf 24 charakterisiert.

Im unverschlissenen Zustand verjüngt sich das Profil der Lauffläche 4 etwa ausgehend von der Hohlkehle 22 bis zum Profilauslauf 24, also nach außen hin und bildet eine konische oder kegelige Form aus. Der unverschlissene Zustand wird durch die im Profil äußere Linie angedeutet.

Bei dem Verschleißvolumen 1 der Bremsklotzsohle 2 nimmt die Gleitreibungszahl f und/oder die Härte in vom Spurkranz 14 weg weisender Richtung zu. Besonders bevorzugt erfolgt dies stufenweise und ist beispielsweise dadurch realisiert, dass in Achsrichtung gesehen zumindest das Verschleißvolumen 1 der Bremsklotzsohle 2 aus verschiedenen, beispielsweise zwei Reibmaterialien unterschiedlicher Gleitreibzahl und/oder Härte besteht. Dabei besteht auf die Breite $B_S$ des Verschleißvolumens 1 bezogen ein zum Spurkranz 14 weisender erster Abschnitt 26 aus einem weicheren und/oder weniger abrasiven Reibmaterial als ein sich diesem anschließender zweiter, dem Profilauslauf 24 zugewandter Abschnitt 28 aus einem demgegenüber härteren und/oder abrasiveren Reibmaterial. Dabei erstreckt sich der erste Abschnitt 26 beispielsweise über eine Mittellinie 30 der Bremsklotzsohle 2 hinaus.

Alternativ könnte die Gleitreibungszahl f ünd/oder die Härte zumindest des Verschleißvolumens 1 der Bremsklotzsohle 2 in vom Spurkranz 14 weg weisender Richtung kontinuierlich zunehmen. Dies kann durch eine sich in Achsrichtung kontinuierlich ändernde Mischung der Komposit-Bremsklotzsohle 2 realisiert sein.

In Fig.2 sind auch die Profile gezeigt, welche sich in verschlissenem Zustand der Bremsklotzsohle 2 ergeben. Dabei sind der Rollverschleiß 32 alleine im unteren Abschnitt und der Rollverschleiß 32 und der Bremsklotzverschleiß 34 zusammen im oberen Abschnitt dargestellt. Die Darstellung des Rollverschleißes 32 im unteren Abschnitt allleine erfolgt lediglich aus Anschauungsgründen, da der Rollverschleiß 32 an einem gebremsten Rad 8 nicht ohne Bremsklotzverschleiß 34 auftritt. Daraus geht hervor, dass die Lauffläche 4 auch im verschlissenen Zustand ihre kegelige oder konische Form beibehält. Grund hierfür ist die in der vom Spurkranz 14 weg weisenden Richtung größere abrasive Wirkung d es Bremsklotzschuhs 2.

Die Bremsklotzsohle 2 weist die übliche Breite $B_S$ von 80 mm auf. Damit nutzt sie allerdings nicht die gesamte zur Verfügung stehende Breite der Lauffläche 4 des Rades 8 aus, wie aus Fig.2 hervorgeht, so dass das Profil im Bereich des Profilauslaufs 24 wenig oder überhaupt nicht verschlissen wird, zumal auch dort kaum Rollverschleiß 32 stattfindet. Damit bildet sich zwar entlang der Breite $B_S$ des Bremsklotzschuhs 1 im verschlissenen Zustand die gewünschte kegelige Profilform aus, jedoch wird diese nicht im Profilauslauf 24 fortgesetzt.

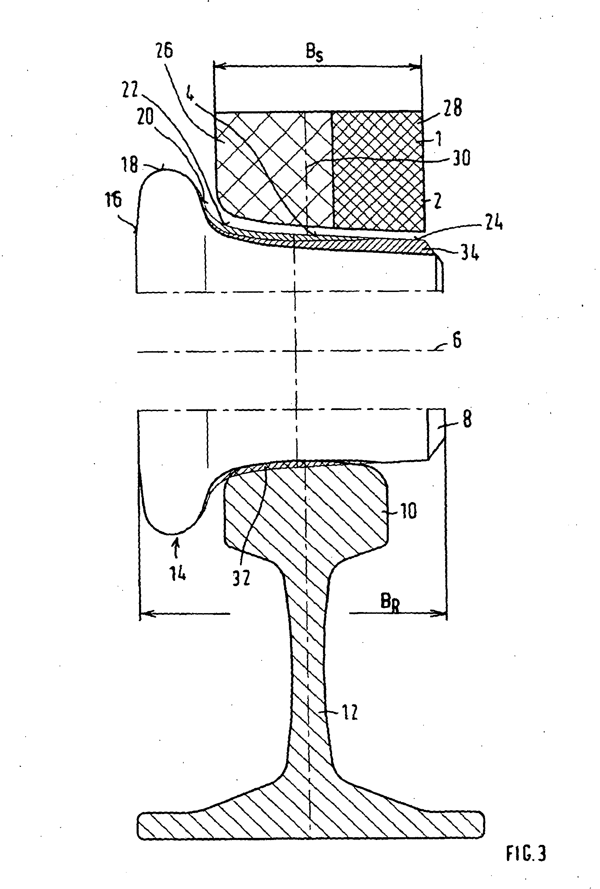

Gemäß einer weiteren, in Fig.3 dargestellten Ausführungsform erstreckt sich das Verschleißvolumen 1 der Bremsklotzsohle 2 daher im wesentlichen bis an das vom Spurkranz 14 abgewandte Ende der Lauffläche 4 des Rades 8 oder bis zum Ende des Profilauslaufs 24. Beispielsweise weist die Bremsklotzsohle 2 eine Breite $B_S$ von 90 mm auf und ist damit breiter als übliche Bremsklotzsohlen 2 mit einer Breite $B_S$ von nur 80 mm. Diese Verbreiterung wird vorzugsweise durch eine Vergrößerung des zweiten Abschnitts 28 aus dem härteren und/oder abrasiveren Reibmaterial erzielt. In der Folge führt der Bremsklotzverschleiß zu einer Fortsetzung der kegeligen Profils bis an das äußere Ende des Profilauslaufs 24. Folglich muss bei der Reprofilierung weniger Material von der Lauffläche 4 des Rades abgetragen werden. In vorteilhafter Weise steht durch die Verbreiterung des Verschleißvolumens 1 außerdem mehr wirksame Bremsfläche zur Verfügung.

Bezugszahlenliste

| | |
|---|---|
| 1 | Verschleißvolumen |
| 2 | Bremsklotzsohle |
| 4 | Lauffläche |
| 6 | Achse |
| 8 | Rad |
| 10 | Schienenkopf |
| 12 | Schiene |
| 14 | Spurkranz |
| 16 | Spurkranzrücken |
| 18 | Spurkranzkuppe |
| 20 | Spurkranzflanke |
| 22 | Hohlkehle |
| 24 | Profilauslauf |
| 26 | erster Abschnitt |
| 28 | zweiter Abschnitt |
| 30 | Mittellinie |
| 32 | Rollverschleiß |
| 34 | Bremsklotzverschleiß |

**Patentansprüche**

1. Bremsklotzeinrichtung für ein Schienenfahrzeug, beinhaltend wenigstens einen Bremsklotz bestehend aus einem Bremsklotzhalter und einer Bremsklotzsohle (2) zur Erzeugung einer Bremskraft durch reibschlüssigen Kontakt eines Verschleißvolumens (1) der Bremsklotzsohle (2) mit einer sich an einen Spurkranz (14) anschließenden Lauffläche (4) eines Rades (8), welche sich im Querschnitt nach außen hin verjüngt, **dadurch gekennzeichnet, dass** im Bereich der Lauffläche (4) die Gleitreibungszahl (f) und/oder die Härte des Verschleißvölumens (1) der Bremsklotzsohle (2) in vom Spurkranz (14) weg weisender Richtung zunimmt.

2. Bremsklotzeinrichtung nach Anspruch 1, **dadurch gekennzeichnet, dass** die die Gleitreibungszahl (f) und/oder die Härte des Verschleißvolumens (1) der Bremsklotzsohle (2) in vom Spurkranz (14) weg weisender Richtung kontinuierlich zunimmt.

**3.** Bremsklotzeinrichtung nach Anspruch 1, **dadurch gekennzeichnet, dass** die die Gleitreibungszahl (f) und/oder die Härte des Verschleißvolumens (1) der Bremsklotzsohle (2) in vom Spurkranz (14) weg weisender Richtung stufenweise zunimmt.

**4.** Bremsklotzeinrichtung nach wenigstens einem der vorhergehenden Ansprüche, **dadurch gekennzeichnet, dass** sich zumindest das Verschleißvolumen (1) der Bremsklotzsohle (2) im wesentlichen bis an das vom Spurkranz (14) abgewandte Ende der Lauffläche (4) des Rades (8) erstreckt.

**5.** Bremsklotzeinrichtung nach wenigstens einem der vorhergehenden Ansprüche, **dadurch gekennzeichnet, dass** die Bremsklotzsohle (2) als Komposit-Bremsklotz oder Verbundstoff-Bremsklotz beinhaltend Kunststoff ausgebildet ist.

**Claims**

**1.** Brake shoe device for a rail vehicle, comprising at least one brake shoe consisting of a brake shoe holder and a brake shoe insert (2) for generating a braking effort by frictional contact of a wear volume (1) of said brake shoe insert (2) with a running surface (4) of a wheel (8), which joins a flange (14), which running surface presents a cross-sectional area tapering towards the outside, **characterised in that** the coefficient of sliding friction (f) and/or the hardness of said wear volume (1) of said brake shoe insert (2) in the zone of said running surface (4) increases in a direction away from said flange (14).

**2.** Brake shoe device according to Claim 1, **characterised in that** said coefficient of sliding friction (f) and/or the hardness of said wear volume (1) of said brake shoe insert (2) continuously increases in a direction away from said flange (14).

**3.** Brake shoe device according to Claim 1, **characterised in that** said coefficient of sliding friction (f) and/or the hardness of said wear volume (1) of said brake shoe insert (2) increases in steps in a direction away from said flange (14).

**4.** Brake shoe device according to at least one of the preceding Claims, **characterised in that** at least said wear volume (1) of said brake shoe insert (2) extends substantially up to the that end of said running surface (4) of said wheel (8), which is turned away from said flange (14).

**5.** Brake shoe device according to at least one of the preceding Claims, **characterised in that** said brake shoe insert (2) is configured as a composite brake shoe or a brake shoe made of a composite material containing a synthetic resin.

**Revendications**

**1.** Dispositif de sabot de frein pour un véhicule ferroviaire, comportant au moins un sabot de frein constitué d'un porte-sabot de frein et d'une semelle (2) de sabot de frein pour la production d'une force de freinage par contact à frottement d'un volume (1) d'usure de la semelle (2) de sabot de frein avec une surface (4) de roulement d'une roue (8) se raccordant à un boudin (14) et se rétrécissant en section transversale vers l'extérieur, **caractérisé en ce que**, dans la zone de la surface (4) de roulement, le coefficient (1) de frottement sur la voie et/ou la dureté du volume (1) d'usure de la semelle (2) du sabot de frein augmente dans la direction s'éloignant du boudin (14).

**2.** Dispositif de sabot de frein suivant la revendication 1, **caractérisé en ce que** le coefficient (f) de frottement de la voie et/ou la dureté du volume (1) d'usure de la semelle (2) du sabot de frein augmente continuellement dans la direction s'éloignant du boudin (14).

**3.** Dispositif de sabot de frein suivant la revendication 1, **caractérisé en ce que** le coefficient (f) de frottement de la voie et/ou la dureté du volume (1) d'usure de la semelle (2) du sabot de frein augmente par palier dans la direction s'éloignant du boudin (14).

**4.** Dispositif de sabot de frein suivant l'une des revendications précédentes, **caractérisé en ce qu'**au moins le volume (1) d'usure de la semelle (2) du sabot de frein s'étend sensiblement jusqu'à l'extrémité de la surface (4) de roulement de la roue (8) éloignée du boudin.

**5.** Dispositif de sabot de frein suivant l'une des revendications précédentes, **caractérisé en ce que** la semelle (2) du sabot de frein est constituée sous la forme d'un sabot de frein composite ou est en une matière plastique contenant un sabot de frein en matière composite.

FIG.1

FIG.2

FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1143992 A
- EP 1063144 A2
- US 2161363 A